(19) Europäisches Patentamt
European Patent Office
Office européen des brevets

(11) Veröffentlichungsnummer: **0 010 129**
**B1**

(12) # EUROPÄISCHE PATENTSCHRIFT

(45) Veröffentlichungstag der Patentschrift: **10.06.81**

(51) Int. Cl.³: **A 01 N 47/22,** C 07 C 149/437 // C07C149/36

(21) Anmeldenummer: **79102939.0**

(22) Anmeldetag: **13.08.79**

(54) **2-(Methylthiomethyl-thio-)-phenyl-N-methylcarbamat, ein Verfahren zu seiner Herstellung und seine Verwendung zur Bekämpfung von Schädlingen.**

(30) Priorität: **28.08.78 DE 2837406**

(43) Veröffentlichungstag der Anmeldung: **30.04.80 Patentblatt 80/9**

(45) Bekanntmachung des Hinweises auf die Patenterteilung: **10.06.81 Patentblatt 81/23**

(84) Benannte Vertragsstaaten: **AT BE CH DE FR GB IT LU NL SE**

(56) Entgegenhaltungen **US-A-3 726 910**

(73) Patentinhaber **BASF Aktiengesellschaft, Carl-Bosch-Strasse 38, D-6700 Ludwigshafen (DE)**

(72) Erfinder: **Loeffler, Hans-Peter, Dr. Dipl.-Chem., Defreggerstrasse 14, D-6700 Ludwigshafen (DE)**
Erfinder: **Kiehs, Karl, Dr. Dipl.-Chem., Sudetenstrasse 22, D-6840 Lampertheim (DE)**
Erfinder: **Adolphi, Heinrich, Dr. Dipl.-Biol., Kalmitweg 11, D-6703 Limburgerhof (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 010 129 B1

BUNDESDRUCKEREI BERLIN

# 2-(Methylthiomethyl-thio)-phenyl-N-methylcarbamat, ein Verfahren zu seiner Herstellung und seine Verwendung zur Bekämpfung von Schädlingen

Die vorliegende Erfindung betrifft die Verbindung 2-(Methylthiomethyl-thio)-phenyl-N-methylcarbamat, Schädlingsbekämpfungsmittel, die 2-(Methylthiomethylthio)-phenyl-N-methylcarbamat als Wirkstoff enthalten, sowie ein Verfahren zur Herstellung des Wirkstoffs.

Carbamate des Thiobrenzcatechins, die insektizid wirksam sind, sind in der US-PS 3 726 910 beschrieben. Unter anderen, strukturell ähnlichen Verbindungen ist 4-(Methylthiomethyl-thio)-phenyl-N-methylcarbamat genannt, das zur Bekämpfung von Fliegen und Zecken geeignet ist.

Es wurde gefunden, daß 2-(Methylthiomethyl-thio)-phenyl-N-methylcarbamat der Formel

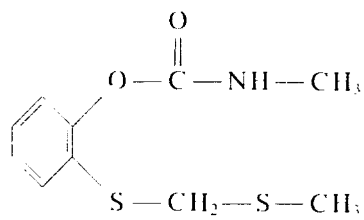

eine ausgezeichnete Wirkung gegen Schädlinge, vorzugsweise gegen Pflanzenschädlinge, hat. Das Carbamat ist aus dem Stand der Technik bekannten Thiobrenzcatechincarbamaten, insbesondere in seiner Wirkung gegen Homopteren, überlegen.

Weiterhin wurde gefunden, daß man 2-(Methylthiomethylthio)-phenyl-N-methylcarbamat durch Umsetzung von 2-(Methylthiomethyl-thio)-phenol mit Methylisocyanat gegebenenfalls in Gegenwart eines Katalysators und gegebenenfalls in Gegenwart eines inerten organischen Lösungsmittels erhält.

Die Umsetzung wird zweckmäßigerweise in einem inerten organischen Lösungsmittel durchgeführt. Geeignet sind beispielsweise Äther, wie Diäthyläther, Dioxane, Tetrahydrofuran, aromatische Kohlenwasserstoffe, wie Benzol, Toluol, Xylole und chlorierte aliphatische Kohlenwasserstoffe, wie Methylenchlorid. Auch Gemische dieser Lösungsmittel können verwendet werden.

Die Umsetzung kann gegebenenfalls durch die für die Reaktion von Isocyanaten mit Phenolen gebräuchlichen Katalysatoren, wie organische Amine, beispielsweise Trimethylamin, Triäthylamin, 1,4-Diazabicyclo[2,2,2]octan, oder organische Zinnverbindungen, beispielsweise Di-n-butylzinndiacetat, Di-n-butylzinndichlorid, beschleunigt werden. Pro Mol 2-(Methylthiomethyl-thio)-phenol werden zweckmäßigerweise 0,0001 bis 0,1 Mol Katalysator zugegeben.

Die Umsetzung liefert gute Ausbeuten an 2-(Methylthiomethyl-thio)-phenyl-N-methylcarbamat, wenn man die Ausgangsstoffe in äquimolarem Verhältnis einsetzt. Im allgemeinen werden die Mengenverhältnisse so gewählt, daß pro Mol 2-(Methylthiomethyl-thio)-phenol 1 bis 2 Mol Methylisocyanat vorliegen.

Geeignete Reaktionstemperaturen liegen im Bereich zwischen −10 und +100°C. Zweckmäßigerweise arbeitet man bei einer Temperatur zwischen Raumtemperatur und 75°C.

Zur Herstellung des 2-(Methylthiomethyl-thio)-phenols wird Mono-thiobrenzcatechin (J. chem. Soc. 1953, S. 1514) mit Chlordimethylsulfid umgesetzt.

Die Umsetzung wird bevorzugt in Lösungsmitteln und in Anwesenheit äquimolarer Mengen einer Base durchgeführt. Als Lösungsmittel können beispielsweise Äther, wie Diäthyläther, Dioxan, Ketone, wie Aceton, Methyläthylketon, Nitrile, wie Acetonitril, verwendet werden. Als Basen können organische Basen, wie Triäthylamin, oder anorganische Basen, wie Kaliumcarbonat, eingesetzt werden. Es empfiehlt sich, die Reaktion unter Ausschluß von Sauerstoff durchzuführen. Statt mit Chlordimethylsulfid kann Mono-thiobrenzcatechin auch durch Umsetzung mit Formaldehyd in Gegenwart von Methylmercaptan hergestellt werden.

Das folgende Beispiel erläutert die Herstellung des 2-(Methylthiomethyl-thio)-phenyl-N-methylcarbamats.

## Beispiel

Unter Stickstoff tropft man zu 18,9 g Mono-thiobrenzcatechin in 400 ml Äther 15,2 g Chlordimethylsulfid. Zu diesem Gemisch werden anschließend unter Rühren bei −10°C 16,7 g Triäthylamin eingetropft. Man rührt 2 Stunden bei 20°C nach, wäscht die organische Phase mit Wasser, trocknet mit Natriumsulfat und entfernt das Lösungsmittel. Man erhält 21,5 g 2-(Methylthiomethyl-thio)-phenol als schwach gefärbtes Öl, das direkt weiter umgesetzt werden kann.

Zu 93 g 2-(Methylthiomethyl-thio)-phenol in 50 ml Tetrahydrofuran gibt man 3 Tropfen Triäthylamin und tropft unter schwacher Kühlung 36,8 ml Methylisocyanat zu. Man läßt 12 Stunden stehen, engt ein und läßt unter Zusatz von Diäthyläther kristallisieren. Man erhält 112 g 2-(Methylthiomethyl-thio)-phenyl-N-methylcarbamat vom Schmelzpunkt 85—86°C.

2-(Methylthiomethyl-thio)-phenyl-N-methylcarbamat eignet sich zur Bekämpfung von Schädlingen, insbesondere aus der Klasse der pflanzenschädigenden Homopteren.

Dazu gehören beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfellaus), Aphis sambuci (Holunderblattlaus), Aphidula nasturtii (Kreuzdornblattlaus), Cerosipha gossypii (Gurkenblattlaus), Cerosipha forbesi (Kleine Erdbeerlaus), Sappaphis mali (Rosige Apfellaus), Sappaphis mala (Mehlige Birnblattlaus), Dysphis radicola (Mehlige Apfelfalterlaus), Brachycaudus cardui (Große Pflanzenblattlaus), Brevicoyne brassicae (Kohlenblattlaus), Phorodon humuli (Hopfenblattlaus), Rhopalomyzus ascalonicus (Zwiebellaus), Myzus persicae (Grüne Pfirsichblattlaus), Myzus cerasi (Schwarze Sauerkirschenlaus), Dysaulacorthum pseudosolani (Gefleckte Kartoffellaus), Acyrthosiphon onobrychis (Grüne Erbsenlaus), Macrosiphon rosae (Große Rosenblattlaus), Macrosiphon solani (Gestreifte Kartoffellaus), Megoura viciae (Wickenlaus), Schizoneura lanuginosa (Birnenblattlaus), Pemphigius bursarius (Salatwurzellaus), Dreyfusia nordmannianae (Tannentrieblaus), Dreyfusia piceae (Weißtannenstammlaus), Adelges laricis (Rote Fichtengallenlaus), Viteus vitifolii (Reblaus), Hyalopterus pruni (Mehlige Pflaumenblattlaus), Phyllaphis fagi (Buchenzierlaus), Yezabura tulipae (Tulpenzwiebellaus), Eriosoma lanigerum (Blutlaus), Eulecanium corni (Gemeine Napfschildlaus).

Der Wirkstoff kann als solcher, in Form von Formulierungen oder den daraus bereiteten Anwendungsmöglichkeiten, z. B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung des erfindungsgemäßen Wirkstoffs gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle, sowie Öle pflanzlichen oder tierischen Ursrungs, aliphatische cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Äthanol, Propanol, Butanol, Chloroform, Tetrachlorkohlenstoff, Cyclohexanol, Cyclohexanon, Chlorbenzol, Isophoron, stark polare Lösungsmittel, z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können der Wirkstoff als solcher oder in einem Öl oder Lösungsmittel gelöst mittels Netz-, Haft-, Dispergier- oder Emulgiermittel in Wasser homogenisiert werden. Es können aber auch aus Wirkstoff, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylenoctylphenoläther, äthoxyliertes Isooctylphenol, Octylphenol, Nonylphenon, Alkylphenolpolyglykoläther, Tributylphenylpolyglykoläther, Alkylarylpolyätheralkohole, Isotridecylalkohol, Fettalkoholäthylenoxid-Kondensate, äthoxyliertes Rizinusöl, Polyoxyäthylenalkyläther, äthoxyliertes Polyoxypropylen, Laurylalkoholpolyglykolätneracetal, Sorbitester, Lignin, Sulfitablaugen und Methylcellulose in Betracht.

Pulver-, Streu- und Stäubemittel können durch Mischen oder gemeinsames Vermahlen des Wirkstoffs mit einem festen Trägerstoff hergestellt werden.

Granulate, z. B. Umhüllungs-, Imprägnierungs- und Homogengranulate können durch Bindung des Wirkstoffs an feste Trägerstoffe hergestellt werden. Feste Trägerstoffe sind z. B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Baumrinden-, Holz- und Nußschalenmehl, Cellulosepulver.

Die Formulierungen enthalten im allgemeinen zwischen 0,1 und 95 Gewichtsprozent Wirkstoff, vorzugsweise zwischen 0,5 und 90 Gewichtsprozent.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Der Wirkstoff kann auch mit gutem Erfolg im Ultra-Low-Volume-Verfahren (ULV) verwendet werden, wobei es möglich ist, Formulierungen mit über 95 Gewichtsprozent Wirkstoff oder sogar den 100%igen Wirkstoff allein auszubringen.

Beispiele für Formulierungen sind:

I. 3 Gewichtsteile 2-(Methylthiomethyl-thio)-phenyl-N-methylcarbamat werden mit 97 Gewichtsteilen feinteiligem Kaolin innig vermischt. Man erhält auf diese Weise ein Stäubemittel, das 3 Gewichtsprozent des Wirkstoffs enthält.

II. 30 Gewichtsteile 2-(Methylthiomethyl-thio)-phenyl-N-methylcarbamat werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 20 Gewichtsteile 2-(Methylthiomethyl-thio)-phenyl-N-methylcarbamat werden in einer Mischung gelöst, die aus 80 Gewichtsteilen Xylol, 10 Gewichtsteilen des Anlagerungsproduktes von 8 bis 10 Mol Äthylenoxid an 1 Mol Ölsäure-N-monoäthanolamid, 5 Gewichtsteilen Calciumsalz der Dodecylbenzolsulfonsäure und 5 Gewichtsteilen des Anlagerungsproduktes von 40 Mol Äthylenoxid an 1 Mol Ricinusöl besteht. Durch Ausgießen und feines Verteilen der Lösung in 100 000 Gewichtsteilen Wasser erhält man eine wäßrige Dispersion, die 0,02 Gewichtsprozent des Wirkstoffs enthält.

IV. 20 Gewichtsteile 2-(Methylthiomethyl-thio)-phenyl-N-methylcarbamat werden in einer Mischung gelöst, die aus 40 Gewichtsteilen Cyclohexanon, 30 Gewichtsteilen Isobutanol, 20 Gewichtsteilen des Anlagerungsproduktes von 7 Mol Äthylenoxid an 1 Mol Isooctylphenol und 10 Gewichtsteilen des Anlagerungsproduktes von 40 Mol Äthylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

Zu dem Wirkstoff können Öle verschiedenen Typs, Herbizide, Fungizide, andere Insektizide, Bakterizide, gegebenenfalls auch erst unmittelbar vor der Anwendung (Tankmix), zugesetzt werden. Diese Mittel können im Gewichtsverhältnis 1 : 10 bis 10 : 1 zugemischt werden.

Beispielsweise können folgende Mittel zugemischt werden: 1,2-Dibrom-3-chlorpropan, 1,3-Dichlorpropan, 1,3-Dichlorpropan + 1,2-Dichlorpropan, 1,2-Dibrom-äthan, 2-sec.-Butylphenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercapto-phenyl-N-methylcarbamat, 4-Dimethylamino-3,5-xylyl-N-methylcarbamat, 2-(1,3-Dioxolan-2-yl)-phenyl-N-methylcarbamat, 1-Naphthal-N-methylcarbamat, 2,3-Dihydro-2,2-dimethyl-benzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N-[(methylcarbamoyl)-oxy]-thio-acetimidat, Methyl-N',N'-dimethyl-N-[(methylcarbamoyl)oxy]-1-thiooxamidat, N-(2-Methyl-4-chlor-phenyl)-N',N'-dimethylformamidin, Tetrachlorthiophen, O,O-Dimethyl-O-(p-nitrophenyl)-phosphorthioat, O,O-Diäthyl-O-(p-nitrophenyl)-phosphorthioat, O-Äthyl-O-(p-nitrophenyl)-phenyl-phosphonothioat, O,O-Dimethyl-O-(3-methyl-4-nitrophenyl)-phosphorthioat, O,O-Diäthyl-O-(2,4-dichlorphenyl)-phosphorthioat, O-Äthyl-O-(2,4-dichlorphenyl)-phenyl-phosphonothioat, O,O-Dimethyl-O-(2,4,5-trichlorphenyl)-phosphorthioat, O-Äthyl-O-(2,4,5-trichlorphenyl)-äthyl-phosphonothioat, O,O-Dimethyl-O-(4-brom-2,5-dichlorphenyl)-phosphorthioat, O,O-Dimethyl-O-(2,5-dichlor-4-jodphenyl)-phosphorthioat, O,O-Dimethyl-O-(3-methyl-4-methylthiophenyl)-phosphorthioat, O-Äthyl-O-(3-methyl-4-methylthiophenyl)-isopropyl-phoshoramidat, O,O-Diäthyl-O-[p-(methylsulfinyl)phenyl]-phosphorthioat, O-Äthyl-S-phenyl-äthyl-phosphonodithioat, O,O-Diäthyl-[2-chlor-1-(2,4-dichlorphenyl)-vinyl]-phosphat, O,O-Dimethyl-[2-chlor-1-(2,4,5-trichlorphenyl)]-vinylphosphat, O,O-Dimethyl-S-(1'-phenyl)-äthylacetat-phosphordithioat, Bis-(dimethylamino)-fluorphosphinoxid Octamethyl-pyrophosphoramid, O,O,O,O-Tetraäthyldithio-pyrophosphat, S-Chlormethyl-O,O-diäthyl-phosphordithioat, O-Äthyl-S,s-dipropyl-phosphordithioat, O,O-Dimethyl-O-2,2-dichlorvinyl-phosphat, O,O-Dimethyl-1,2-dibrom-2,2-dichloräthylphosphat, O,O-Dimethyl-2,2,2-trichlor-1-hydroxy-äthylphosphonat, O,O-Dimethyl-S-[1,2-biscarbäthoxy-äthyl-(1)]-phosphordithioat, O,O-Dimethyl-O-(1-methyl-2-carbmethoxy-vinyl)-phosphat, O,O-Dimethyl-S-(N-methyl-carbamoyl-methyl)-phosphordithioat, O,O-Dimethyl-S-(N-methyl-carbamoyl-methyl)-phosphorthioate, O,O-Dimethyl-S-(N-methoxyäthyl-carbamoyl-methyl)-phosphordithioat, O,O-Dimethyl-S-(N-formyl-N-methyl-carbamoylmethyl-phosphordithioat, O,O-Dimethyl-O-[1-methyl-2-(methyl-carbamoyl)-vinyl]-phosphat, O,O-Dimethyl-O-[(1-methyl-2-dimethylcarba-2-diäthylcarbamoyl)-vinyl]-phosphat, O,O-Diäthyl-S-(äthylthio-methyl)-phosphordithioat, O,O-Diäthyl-S-[(p-Chlorphenylthio)-methyl]-phosphordithioat, O,O-Dimethyl-S-(2-äthylthioäthyl)-phosphorthioat, O,O-Dimethyl-S-(2-äthylthioäthyl-phosphordithioat, O,O-Dimethyl-S-(2-äthylsulfinyl-äthyl)-phosphorthioat, O,O-Diäthyl-S-(2-äthylthio-äthyl)-phosphordithioat, O,O-Dimethyl-S-(2-äthylsulphinyl-äthyl)-phosphorthioat, O,O-Diäthylthiophosphoryliminophenyl-acetonitril, O,O-Diäthyl-S-(2-chlor-1-phthalimidoäthyl)-phosphordithioat, O,O-Diäthyl-S-[6-chlor-benzoxazolon-(2)-yl(3)]-methyldithiophosphat, O,O-Dimethyl-S-[2-methoxy-1,3,4-thiodiazol-5-onyl(4)-methyl]-phosphordithioat, O,O-Diäthyl-O-[(3,5,6-trichlor-pyridyl-(2)]-phosphor-

thioat, O,O-Diäthyl-O-(2-pyrazinyl)-phosphorthioat, O,O-Diäthyl-O-[2-isopropyl-4-methyl-pyrimidinyl-(6)]-phosphorthioat, O,O-Diäthyl-O-[2-(diäthylamino)-6-methyl-4-pyrimidinyl]-thionophosphat, O,O-Dimethyl-S-(4-oxo-1,2,3-benzotriazin-3-yl-methyl)-phosphordithioat, O,O-Dimethyl-S-[(4,6-diamino-1,3,5-triazin-2-yl)-methyl]-phosphordithioat, O,O-Diäthyl-(1-phenyl-1,2,4-triazol-3-yl)-thionophosphat, O,S-Dimethyl-phosphor-amido-thioat, O,S-Dimethyl-N-acetyl-phosphoramidothioat, $\alpha$-Hexachlorcyclohexan, 1,1-Di-(p-methoxyphenyl)-2,2,2-trichlor-äthan, 6,7,8,9,10,10-Hexachloro-1,5,5a,6,9,9a-hexahydro-6,9-methano-2,4,3-benzodioxa-thiepin-3-oxid, Pyrethrine, DL-2-Allyl-3-methyl-cyclopenten-(2)-on-(1)-yl-(4)-DL-cis,trans-chrysanthemat, 5-Benzyl-furyl-(3)-methyl-DL-cis,trans-chrysanthemat, 3-Phenoxybenzyl(±)-cis,trans-2,2-dimethyl-3-(2,2-dichlorvinyl)-cyclopropancarboxylat, $\alpha$-Cyano-3-phenoxybenzyl(±)-cis,trans-2,2-dimethyl-3-(2,2-dichlorvinyl)-cyclopropancarboxylat, (s)- -Cyano-3-phenoxybenzyl-cis(IR,3R)-2,2-dimethyl-3-(2,2-dibromvinyl)-cyclopropancarboxylat, 3,4,5,6-Tetrahydrophthalimidoäthyl-DL-cis, trans-chrysanthemat, 2-Methyl-5-(2-propinyl)-3-furylmethyl-chrysanthemat, $\alpha$-Cyano-3-phenoxybenzyl-$\alpha$-isopropyl-4-chlorphenylacetat.

Die folgenden Beispiele belegen die biologische Wirkung des erfindungsgemäßen Wirkstoffs. Vergleichsmittel sind das aus der US-PS 3 726 910 bekannte 4-(Methylthiomethyl-thio)-phenyl-N-methylcarbamat (1) und das aus der DE-OS 1 910 588 bekannte 2-(Äthylthiomethyl)-phenyl-N-methylcarbamat (2).

Beispiel A

Wirkung gegen Schwarze Bohnenlaus (Aphis fabae)

Junge Bohnenpflanzen (Vicia faba), die starke Kolonien der Schwarzen Laus tragen, werden in der Spritzkabine allseitig mit der wäßrigen Wirkstoffzubereitung tropfnaß gespritzt. Die Wirkung wird nach 4 Tagen registriert.

| Wirkstoff | Wirkstoffkonzentration (%) | Mortalitätsrate (%) |
|---|---|---|
| Erfindungsgemäßer Wirkstoff | 0,002<br>0,001 | 100<br>ca. 80 |
| Vergleichsmittel 1 | 0,1 | 50 |
| Vergleichsmittel 2 | 0,002 | ca. 80 |

Beispiel B

Systemische Wirkung gegen Blattläuse (Aphis fabae)

Getopfte Bohnenpflanzen, die mit der Schwarzen Laus infiziert sind, werden mit 30 ml der wäßrigen Aufbereitung der Wirkstoffe angegossen. Man bestimmt die Wirkung nach 24 Stunden.

| Wirkstoff | Wirkstoffkonzentration (%) | Mortalitätsrate (%) |
|---|---|---|
| Erfindungsgemäßer Wirkstoff | 0,02<br>0,01 | 100<br>ca.80 |
| Vergleichsmittel 1 | 0,1 | unwirksam |

**Patentansprüche für die Vertragsstaaten: BE, CH, DE, FR, GB, IT, LU, NL, SE**

1. 2-(Methylthiomethyl-thio)-phenyl-N-methylcarbamat der Formel

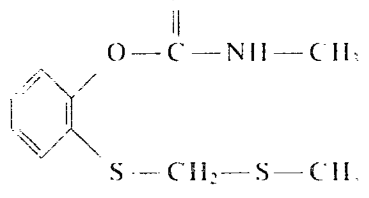

2. Verfahren zur Herstellung von 2-(Methylthiomethyl-thio)-phenyl-N-methylcarbamat, dadurch gekennzeichnet, daß man 2-(Methylthiomethyl-thio)-phenol gegebenenfalls in Gegenwart eines Katalysators und gegebenenfalls in Gegenwart eines inerten organischen Lösungsmittels mit Methylisocyanat umsetzt.

3. Schädlingsbekämpfungsmittel, enthaltend einen festen oder flüssigen Trägerstoff und 2-(Methylthiomethyl-thio)-phenyl-N-methylcarbamat.

4. Mittel zur Bekämpfung von Homopteren, enthaltend einen festen oder flüssigen Trägerstoff und 2-(Methylthiomethyl-thio)-phenyl-N-methylcarbamat.

5. Verfahren zur Bekämpfung von Schädlingen, dadurch gekennzeichnet, daß man 2-(Methylthiomethyl-thio)-phenyl-N-methylcarbamat auf die Schädlinge bzw. deren Lebensraum einwirken läßt.

**Patentansprüche für den Vertragsstaat: AT**

1. Schädlingsbekämpfungsmittel, enthaltend einen festen oder flüssigen Trägerstoff und 2-(Methylthiomethyl-thio)-phenyl-N-methylcarbamat der Formel

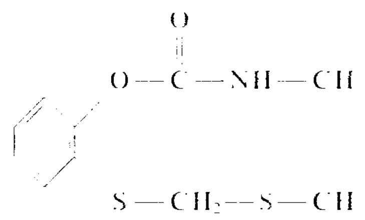

als Wirkstoff.

2. Mittel zur Bekämpfung von Homopteren, enthaltend einen festen oder flüssigen Trägerstoff und 2-(Methylthiomethyl-thio)-phenyl-N-methylcarbamat.

3. Verfahren zur Herstellung von 2-(Methylthiomethyl-thio)-phenyl-N-methylcarbamat, dadurch gekennzeichnet, daß man 2-(Methylthiomethyl-thio)-phenol gegebenenfalls in Gegenwart eines Katalysators und gegebenenfalls in Gegenwart eines inerten organischen Lösungsmittels mit Methylisocyanat umsetzt.

**Claims for the contracting states: BE, CH, DE, FR, GB, IT, LU, NL, SE**

1. 2-(methylthiomethylthio)-phenyl-N-methylcarbamate of the formula

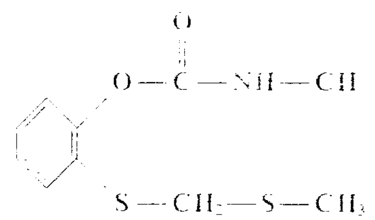

2. A process for the production of 2-(methylthiomethyl-thio)-phenyl-N-methylcarbamate, characterized in that 2-(methylthiomethylthio)-phenol is reacted with methyl isocyanate in the presence or absence of a catalyst and in the presence or absence of an inert organic solvent.

3. A pesticide containing a solid or liquid carrier and 2-(methylthiomethylthio)-phenyl-N-methylcarbamate.

4. An agent for combating Homoptera, containing a solid or liquid carrier and 2-(methylthiomethylthio)-phenyl-N-methylcarbamate.

5. A process for combating pests, characterized in that 2-(methylthiomethylthio)-phenyl-N-methylcarbamate is allowed to act on the pests or their habitat

**Claims for the Contracting state: AT**

1. A pesticide containing a solid or liquid carrier and 2-(methylthiomethylthio)-phenyl-N-methylcarbamate of the formula

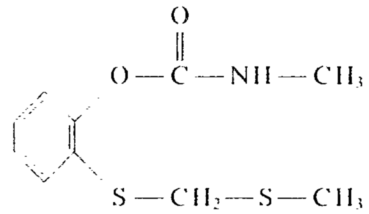

as active ingredient.

2. An agent for combating Homoptera, containing a solid or liquid carrier and 2-(methylthiomethylthio)-phenyl-N-methylcarbamate.

3. A process for the production of 2-(methylthiomethylthio)-phenyl-N-methylcarbamate, characterized in that 2-(methylthiomethylthio)-phenol is reacted with methyl isocyanate in the presence or absence of a catalyst and in the presence or absence of an inert organic solvent.

**Revendications pour l'Etats contractants: BE, CH, DE, FR, GB, IT, LU, NL, SE**

1. 2-(méthylthiométhyl-thio)-phényl-N-méthylcarbamate de formule

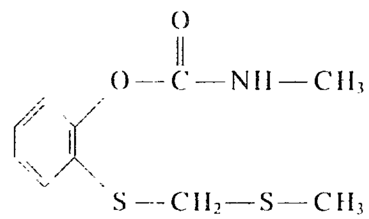

2. Procédé de préparation de 2-(méthylthiométhyl-thio)-phényl-N-méthylcarbamate, caractérisé par le fait qu'on fait réagir du 2-(méthylthiométhyl-thio)-phénol avec de l'isocyanate de méthyle, éventuellement en présence d'un catalyseur et éventuellement en présence d'un solvant organique inerte.

3. Agent antiparasitaire contenant un support solide ou liquide et du 2-(méthylthiométhyl-thio)-phényl-N-méthylcarbamate.

4. Moyen de lutte contre les homoptères, contenant un support solide ou liquide et du 2-(méthylthiométhyl-thio)-phényl-N-méthylcarbamate.

5. Procédé de lutte contre les parasites, caractérisé par le fait qu'on fait agir du 2-(méthylthiométhyl-thio)-phényl-N-méthylcarbamate sur les parasites ou sur leur biotope.

**Revendications pour l'Etat contractant: AT**

1. Agent antiparasitaire contenant, comme principe actif, un support solide ou liquide et du 2-(méthylthiométhyl-thio)-phényl-N-méthylcarbamate de formule

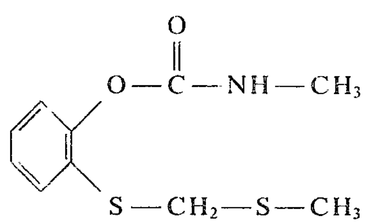

2. Moyen de lutte contre les homoptères contenant un support solide ou liquide et du 2-(méthylthiométhyl-thio)-phényl-N-méthylcarbamate.

3. Procédé de préparation de 2-(méthylthiométhyl-thio)-phényl-N-méthylcarbamate, caractérisé par le fait qu'on fait réagir du 2-(méthylthiométhyl-thio)-phénol avec de l'isocyanate de méthyle, éventuellement en présence d'un catalyseur et éventuellement en présence d'un solvant organique inerte.